# EUROPÄISCHE PATENTSCHRIFT

(11) **EP 2 649 424 B1**
(45) Veröffentlichungstag und Bekanntmachung des Hinweises auf die Patenterteilung: **25.10.2017**
(21) Anmeldenummer: 11779608.6
(22) Anmeldetag: 26.10.2011
(51) Int. Cl.: G01K 1/02, G01K 3/14, H01M 10/48

(54) **VORRICHTUNG UND VERFAHREN ZUR MESSUNG EINER EXTREMALEN TEMPERATUR**
DEVICE AND METHOD FOR MEASURING AN EXTREMAL TEMPERATURE
DISPOSITIF ET PROCÉDÉ DE MESURE D'UNE TEMPÉRATURE EXTRÊME

(30) Priorität: 10.12.2010 DE 102010062844
(43) Veröffentlichungstag der Anmeldung: 16.10.2013
(73) Patentinhaber: Robert Bosch GmbH, 70469 Stuttgart (DE); SAMSUNG SDI CO., LTD., Yongin-si, Gyeonggi-do (KR)
(72) Erfinder: BUTZMANN, Stefan, 71717 Beilstein (DE)
(74) Vertreter: Bee, Joachim
(86) Internationale Anmeldenummer: PCT/EP2011/068692
(87) Internationale Veröffentlichungsnummer: WO 2012/076243

(56) Entgegenhaltungen:
- US-A1- 2005 206 347
- US-A1- 2007 210 769

## Beschreibung

Die vorliegende Erfindung betrifft eine Vorrichtung und ein Verfahren zur Messung einer extremalen Temperatur unter einer Vielzahl von Temperaturen, und insbesondere eine Vorrichtung zur Messung der maximalen Temperatur unter den Temperaturen der Batteriezellen einer Batterie, sowie ein Batteriemanagementsystem mit einer solchen Vorrichtung, eine Batterie mit einer solchen Vorrichtung oder einem solchen Batteriemanagementsystem und ein Kraftfahrzeug mit einer solchen Batterie.

### Stand der Technik

Es zeichnet sich ab, dass in Zukunft sowohl bei stationären Anwendungen (z. B. bei Windkraftanlagen) als auch in Fahrzeugen wie Hybrid- und Elektrofahrzeugen vermehrt neue Batteriesysteme zum Einsatz kommen werden, an die sehr hohe Anforderungen bezüglich Zuverlässigkeit gestellt werden. Hintergrund für diese hohen Anforderungen ist, dass ein Ausfall der Batterie zu einem Ausfall des Gesamtsystems oder sogar zu einem sicherheitsrelevanten Problem führen kann. So werden beispielsweise bei Windkraftanlagen Batterien eingesetzt, um bei starkem Wind die Anlage durch eine Rotorblattverstellung vor unzulässigen Betriebszuständen zu schützen.

Typischerweise wird heute bei Lithium-Ionen-Batterien die Spannung jeder Zelle einzeln überwacht. Dies geschieht durch Clusterung der einzelnen Zellen zu Modulen und Einsatz einer Überwachungseinheit in Form einer integrierten Schaltung, welche die Zellspannungen misst und über einen Kommunikations-Bus an eine zentrale Steuereinheit sendet, welche daraus den Zustand (Ladezustand, Alterung, ...) der einzelnen Zellen berechnet. Zugleich werden in der Regel Temperatursensoren an mehreren Zellen innerhalb eines Batteriestrangs angebracht, um die Temperatur der Zellen zu überwachen. Hierbei ist von besonderer Bedeutung, dass keine der Zellen eine bestimmte Maximaltemperatur überschreitet.
Typischerweise werden als Temperatursensoren Heißleiter, das heißt Widerstände mit negativem Temperaturkoeffizienten (NTC-Widerstände) verwendet. Dabei gibt der Temperaturkoeffizient die relative Änderung des elektrischen Widerstands mit der Temperatur an, das heißt bei negativem Temperaturkoeffizienten sinkt der Widerstand mit steigender Temperatur.

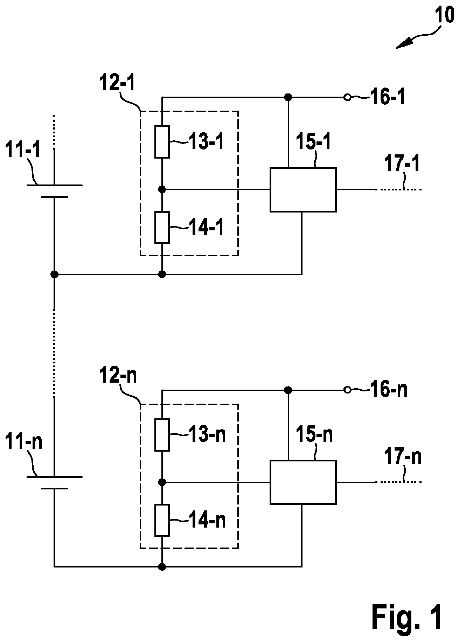

Figur 1 zeigt ein Schaltbild für eine Vorrichtung zur Messung der Temperaturen von Batteriezellen 11-1, ..., 11-n einer Batterie 10 nach dem Stand der Technik. Die Temperaturen der in Reihe geschalteten Batteriezellen 11-1, ..., 11-n werden jeweils mit Hilfe von Spannungsteilern 12-1, ..., 12-n gemessen, die jeweils aus einem festen Widerstand 13-1, ..., 13-n und einem Widerstand mit negativem Temperaturkoeffizienten 14-1, ..., 14-n bestehen, wobei der Widerstand mit negativem Temperaturkoeffizienten 14-1, ..., 14-n jeweils an der Batteriezelle 11-1, ..., 11-n angebracht ist, so dass er im Wesentlichen dieselbe Temperatur aufweist wie diese. Analog-Digital-Wandler 15-1, ..., 15-n messen jeweils die Teilungsverhältnisse, in denen die Spannungsteiler 12-1, ..., 12-n die angelegten Spannungen 16-1, ..., 16-n teilen, und geben entsprechende digitale Signale 17-1, ..., 17-n aus, aus denen jeweils auf die Temperaturen der Widerstände mit negativem Temperaturkoeffizienten 14-1, ..., 14-n, und damit die der Batteriezellen 11-1, ..., 11-n, zurückgeschlossen werden kann.
Zur Bestimmung der maximalen Temperatur unter den Temperaturen der Batteriezellen 11-1, ..., 11-n ist also bei dieser Vorrichtung nach dem Stand der Technik eine Analog-Digital-Wandlung der temperaturabhängigen Signale mit anschließendem digitalen Vergleich der Temperaturwerte zur Ermittlung der maximalen Temperatur erforderlich. Weiter gibt es im Stand der Technik die US 2005/0206347 A1, in der eine Schaltung beschrieben ist, mit der eine Maximaltemperatur einer Reihe von Temperatursensoren bestimmt werden kann.

### Offenbarung der Erfindung

Erfindungsgemäß wird eine Vorrichtung zur Messung der extremalen Temperatur unter den Temperaturen einer Vielzahl von Temperatursensoren gemäss Anspruch 1 zur Verfügung gestellt, wobei ein erster Temperatursensor dazu ausgelegt ist, einen Strom zu führen, der seiner Temperatur entspricht, und der (k+1)-te Temperatursensor jeweils dazu ausgelegt ist, den größeren eines Stromes, der seiner Temperatur entspricht, und des Stromes, den der k-te Temperatursensor führt, zu führen. Hier und im Folgenden durchläuft die ganze Zahl k jeweils sämtliche Werte von 1 bis zu einem maximalen Wert, wobei der maximale Wert bei Aussagen, in denen der Ausdruck k+1 vorkommt, um eins geringer ist als die Anzahl der Temperatursensoren, und wobei der maximale Wert bei Aussagen, in denen nur die Zahl k und nicht der Ausdruck k+1 vorkommt, gleich der Anzahl der Temperatursensoren ist.
Die extremale Temperatur kann entweder die maximale Temperatur oder die minimale Temperatur sein. Die Relation zwischen Strömen und Temperaturen ist für alle Temperatursensoren dieselbe.
In einer bevorzugten Ausführung der Erfindung ist die extremale Temperatur die maximale Temperatur, und die Temperatursensoren sind jeweils Widerstände mit negativem Temperaturkoeffizienten. Vorzugsweise ist die Temperaturabhängigkeit R(T) des elektrischen Widerstands der Temperatursensoren für alle Temperatursensoren jeweils dieselbe. In diesem Fall kann durch die Wahl einer Referenzspannung U_{Ref} für alle Temperatursensoren gemäß der Gleichung I = U_{Ref} / R (T) dieselbe Relation zwischen Temperatur und Strom hergestellt werden. Grundsätzlich ist es jedoch auch möglich, mittels verschiedener Temperaturabhängigkeiten des elektrischen Widerstands und verschiedener Referenzspannungen für alle Temperatursensoren dieselbe Relation zwischen Temperatur und Strom herzustellen. Erfindungsgemäss umfasst die Vorrichtung ferner eine Vielzahl von ersten Verstärkerschaltungen, wobei jede der ersten Verstärkerschaltungen einen ersten Eingang, einen zweiten Eingang sowie einen Ausgang aufweist und derart ausgelegt ist, dass sich ein Strom von dem zweiten Eingang zu dem Ausgang derart einstellt, dass das elektrische Potential des ersten Eingangs mindestens gleich dem elektrischen Potential des zweiten Eingangs ist. Die Anzahl der ersten Verstärkerschaltungen ist dabei vorzugsweise gleich der Anzahl der Temperatursensoren. Erfindungsgemäss umfasst die Vorrichtung ferner eine Vielzahl von zweiten Verstärkerschaltungen, wobei jede der zweiten Verstärkerschaltungen einen ersten Eingang, einen zweiten Eingang sowie einen Ausgang aufweist und derart ausgelegt ist, dass sich ein Strom von dem Ausgang zu dem zweiten Eingang derart einstellt, dass das elektrische Potential des zweiten Eingangs mindestens gleich dem elektrischen Potential des ersten Eingangs ist. Die Anzahl der zweiten Verstärkerschaltungen ist dabei vorzugsweise um eins geringer als die Anzahl der Temperatursensoren. Sind lediglich zwei Temperatursensoren vorgesehen, so umfasst die Vorrichtung statt einer Vielzahl von zweiten Verstärkerschaltungen vorzugsweise nur eine zweite Verstärkerschaltung.
In einer bevorzugten Ausführungsform umfasst jede der Verstärkerschaltungen einen Operationsverstärker und einen Transistor, wobei jeweils der nicht invertierende Eingang des Operationsverstärkers den ersten Eingang der Verstärkerschaltung bildet, der invertierende Eingang des Operationsverstärkers den zweiten Eingang der Verstärkerschaltung bildet, ein erster Anschluss des Transistors mit dem zweiten Eingang der Verstärkerschaltung verbunden ist, ein zweiter Anschluss des Transistors den Ausgang der Verstärkerschaltung bildet und der Steueranschluss des Transistors mit dem Ausgang des Operationsverstärkers verbunden ist.

Die Vorrichtung umfasst eine Vielzahl von Referenzspannungsquellen wobei vorzugsweise alle Referenzspannungsquellen jeweils dieselbe Referenzspannung bereitstellen. Gemäss der Erfindung ist der erste Eingang der k-ten ersten Verstärkerschaltung jeweils mit einem ersten Anschluss der k-ten Referenzspannungsquelle verbunden, der zweite Eingang der k-ten ersten Verstärkerschaltung jeweils mit einem ersten Anschluss des k-ten Temperatursensors verbunden, ein zweiter Anschluss des ersten Temperatursensors mit einem zweiten Anschluss der ersten Referenzspannungsquelle verbunden, ein zweiter Anschluss des (k+1)-ten Temperatursensors jeweils mit dem Ausgang der k-ten ersten Verstärkerschaltung und dem zweiten Eingang der k-ten zweiten Verstärkerschaltung verbunden und der zweite Anschluss der (k+1)-ten Referenzspannungsquelle jeweils mit dem ersten Eingang der k-ten zweiten Verstärkerschaltung verbunden.

Bevorzugt ist, dass die Temperatursensoren jeweils an den Batteriezellen eines Batteriestrangs einer Batterie angebracht sind. Dabei ist unter einem Batteriestrang eine Vielzahl von in Reihe geschalteten Batteriezellen zu verstehen. Vorzugsweise ist die Batterie eine Lithium-Ionen-Batterie.

In einer bevorzugten Ausführungsform der Erfindung sind der erste Anschluss der k-ten Referenzspannungsquelle und der erste Eingang der k-ten ersten Verstärkerschaltung jeweils mit dem Minuspol der k-ten Batteriezelle verbunden, und der Pluspol der (k+1)-ten Batteriezelle ist jeweils mit dem Ausgang der k-ten zweiten Verstärkerschaltung verbunden.

Die Erfindung stellt ferner ein Batteriemanagementsystem mit einer erfindungsgemäßen Vorrichtung, eine Batterie mit einer erfindungsgemäßen Vorrichtung oder einem erfindungsgemäßen Batteriemanagementsystem sowie ein Kraftfahrzeug, insbesondere ein elektrisches Kraftfahrzeug, mit einer erfindungsgemäßen Batterie bereit.

Ferner stellt die Erfindung ein Verfahren zur Messung der extremalen Temperatur unter einer Vielzahl von Temperaturen bereit, wobei ein erster Strom hervorgerufen wird, der einer ersten Temperatur entspricht, und weitere Ströme hervorgerufen werden, wobei jeweils der (k+1)-te Strom der größere des k-ten Stromes und eines Stromes, der der (k+1)-ten Temperatur entspricht, ist.

### Zeichnungen

Ein Ausführungsbeispiel der Erfindung wird anhand der Zeichnungen und der nachfolgenden Beschreibung näher erläutert. Es zeigen:
Figur 1 ein Schaltbild für eine Vorrichtung zur Messung der Temperaturen von Batteriezellen einer Batterie nach dem Stand der Technik, und
Figur 2 ein Schaltbild für eine erfindungsgemäße Vorrichtung zur Messung der maximalen Temperatur unter den Temperaturen der Batteriezellen einer Batterie.

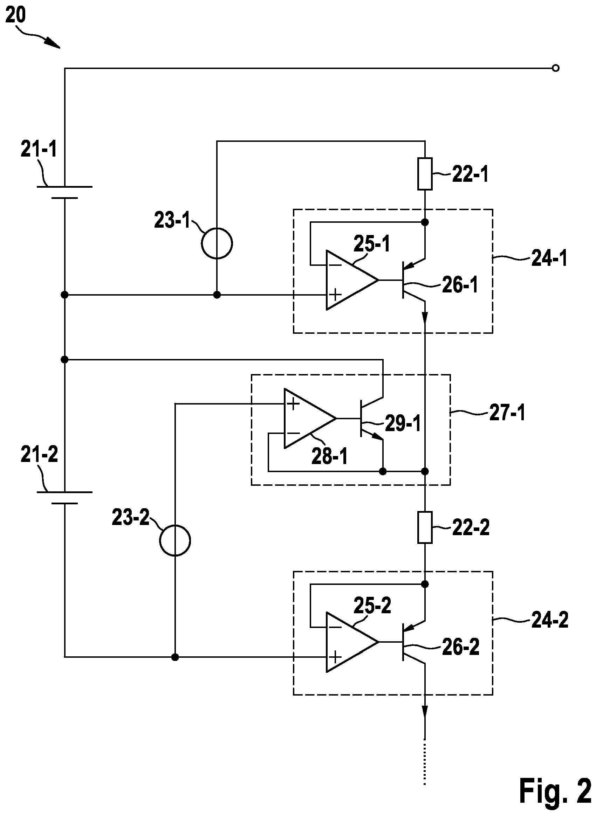

Die in Figur 2 gezeigte Batterie 20 umfasst einen Batteriestrang aus Batteriezellen 21-1, 21-2, ..., die in Reihe geschaltet sind. An den Batteriezellen 21-1, 21-2, ..., deren Temperatur erfasst werden soll, sind als Temperatursensoren jeweils Heißleiter 22-1, 22-2, ... angebracht, die jeweils von Referenzspannungsquellen 23-1, 23-2, ... mit Strom versorgt werden. Die Heißleiter 22-1, 22-2, ... weisen jeweils dieselbe Temperaturabhängigkeit R(T) des elektrischen Widerstandes auf. Die Referenzspannungsquellen 23-1, 23-2, ... stellen jeweils dieselbe Referenzspannung U_{Ref} bereit. Dabei ist jeweils ein erster Anschluss der Referenzspannungsquellen 23-1, 23-2, ... mit dem Minuspol der entsprechenden Batteriezelle 21-1, 21-2, ... verbunden. Ein erster Anschluss der Heißleiter 22-1, 22-2, ... wird jeweils über eine Verstärkerschaltung 24-1, 24-2, ... dynamisch auf dem elektrischen Potential des Minuspols der zugehörigen Batteriezelle 21-1, 21-2, ... gehalten.

Die Verstärkerschaltungen 24-1, 24-2, ... bestehen jeweils aus einem Operationsverstärker 25-1, 25-2, ... und einem pnp-Transistor 26-1, 26-2, ..., die in Gegenkopplung so verschaltet sind, dass sich der Strom vom Emitter zum Kollektor des pnp-Transistors 26-1, 26-2, ... jeweils so einstellt, dass das elektrische Potential des nicht invertierenden Eingangs des Operationsverstärkers 25-1, 25-2, ... jeweils mindestens gleich dem elektrischen Potential des invertierenden Eingangs des Operationsverstärkers 25-1, 25-2, ... ist. Da die pnp-Transistoren 26-1, 26-2, ... beim Betrieb der Schaltung nicht sperren, werden die beiden Eingänge der Operationsverstärker 25-1, 25-2, ... jeweils auf demselben elektrischen Potential gehalten.

Der nicht invertierende Eingang der Operationsverstärker 25-1, 25-2, ... ist jeweils mit dem Minuspol der entsprechenden Batteriezelle 21-1, 21-2, ... sowie mit dem ersten Anschluss der entsprechenden Referenzspannungsquelle 23-1, 23-2, ... verbunden. Der invertierende Eingang der Operationsverstärker 25-1, 25-2, ... ist jeweils mit dem ersten Anschluss des entsprechenden Heißleiters 22-1, 22-2, ... verbunden.

Ein zweiter Anschluss der ersten Referenzspannungsquelle 23-1 ist mit einem zweiten Anschluss des ersten Heißleiters 22-1 verbunden. Dementsprechend fließt durch den Heißleiter 22-1 ein Strom I₁ = U_{Ref} / R₁, wobei R₁ den temperaturabhängigen elektrischen Widerstand des Heißleiters 22-1 bezeichnet. Da ein zweiter Anschluss der übrigen Heißleiter 22-2, ... jeweils mit dem Ausgang der vorangehenden ersten Verstärkerschaltung 24-1, 24-2, ... verbunden ist, wird dieser Strom durch den pnp-Transistor 26-1 an den nächsten Heißleiter 22-2 weitergeleitet.

Entscheidend ist nun, dass der zweite Anschluss der übrigen Heißleiter 22-2, ... außerdem jeweils mit dem zweiten Eingang einer weiteren Verstärkerschaltung 27-1, ... verbunden ist. Diese weiteren Verstärkerschaltungen 27-1, ... bestehen jeweils aus einem Operationsverstärker 28-1, ... und einem npn-Transistor 29-1, ..., die in Gegenkopplung so verschaltet sind, dass sich der Strom vom Kollektor zum Emitter des npn-Transistors 29-1, ... jeweils so einstellt, dass das elektrische Potential des invertierenden Eingangs des Operationsverstärkers 28-1, ... jeweils mindestens gleich dem elektrischen Potential des nicht invertierenden Eingangs des Operationsverstärkers 28-1, ... ist.

Abhängig von den Temperaturen und somit den elektrischen Widerständen der beiden Heißleiter 22-1 und 22-2 sind nun zwei Fälle zu unterscheiden. Ist die Temperatur der Batteriezelle 21-1, und damit die des Heißleiters 22-1, höher als die Temperatur der Batteriezelle 21-2, und damit die des Heißleiters 22-2, so ist der elektrische Widerstand des Heißleiters 22-1, R₁, kleiner als der elektrische Widerstand des Heißleiters 22-2, R₂. In diesem Fall fließt der Strom I₁ über den Heißleiter 22-2 und den pnp-Transistor 26-2 weiter nach unten. Die Spannung über dem Heißleiter 22-2 ist in diesem Fall größer als die Referenzspannung U_{Ref}. Daher sperrt der npn-Transistor 29-1 und speist keinen zusätzlichen Strom in den Heißleiter 22-2 ein, so dass der Strom I₂, der durch den Heißleiter 22-2 fließt, in diesem Fall gleich dem Strom I₁ ist, der durch den Heißleiter 22-1 fließt.

Ist dagegen die Temperatur der Batteriezelle 21-1, und damit die des Heißleiters 22-1, niedriger als die Temperatur der Batteriezelle 21-2, und damit die des Heißleiters 22-2, so ist der elektrische Widerstand des Heißleiters 22-1, R₁, größer als der elektrische Widerstand des Heißleiters 22-2, R₂. In diesem Fall würde der invertierende Eingang des Operationsverstärkers 28-1 auf niedrigerem elektrischen Potential liegen als der nicht invertierende Eingang des Operationsverstärkers 28-1, wenn durch den Heißleiter 22-2 lediglich der Strom I₁ fließen würde. Daher wird in diesem Fall über den nicht gesperrten npn-Transistor 29-1 so viel Strom zusätzlich in den Heißleiter 22-2 gespeist, dass wiederum die Referenzspannung U_{Ref} an dem Heißleiter 22-2 abfällt und die beiden Eingänge des Operationsverstärkers 28-1 auf demselben elektrischen Potential liegen. Der Strom I₂ durch den Heißleiter 22-2 und den pnp-Transistor 26-2 beträgt in diesem Fall I₂ = U_{Ref} / R₂.

Insgesamt gilt also I₂ = max (I₁, U_{Ref} / R₂), das heißt, der Strom I₂ entspricht der höheren der beiden Temperaturen der beiden Heißleiter 22-1 und 22-2, und damit der beiden Batteriezellen 21-1 und 21-2.

Eine entsprechende Betrachtung zeigt, dass der Strom durch jeden weiteren Heißleiter (nicht gezeigt) jeweils entweder gleich dem Strom durch den vorangehenden Heißleiter ist oder der Temperatur des besagten weiteren Heißleiters entspricht. Daraus ergibt sich durch vollständige Induktion, dass der Strom durch jeden der Heißleiter 22-1, 22-2, ... jeweils der maximalen Temperatur unter den Temperaturen des besagten Heißleiters und aller vorangehenden Heißleiter entspricht. Insbesondere folgt, dass der Strom durch den letzten Heißleiter in der Kette der maximalen Temperatur unter den Temperaturen sämtlicher Heißleiter entspricht, und damit der gesuchten maximalen Temperatur unter den Temperaturen sämtlicher Batteriezellen.

Das Prinzip der Erfindung ist oben für den in der Praxis besonders relevanten Fall der Bestimmung der maximalen Temperatur unter einer Vielzahl von Temperaturen dargestellt worden. Es versteht sich, dass sich dieses Prinzip ebenso auf den Fall der Bestimmung der minimalen Temperatur unter einer Vielzahl von Temperaturen anwenden lässt, indem statt der Heißleiter Kaltleiter, das heißt Widerstände mit positivem Temperaturkoeffizienten (PTC-Widerstände) verwendet werden. In diesem Fall entspricht der Strom durch jeden der Kaltleiter jeweils der minimalen Temperatur unter den Temperaturen des besagten Kaltleiters und aller vorangehenden Kaltleiter, und der Strom durch den letzten Kaltleiter in der Kette entspricht der minimalen Temperatur unter den Temperaturen sämtlicher Kaltleiter.

Ebenso ist für den Fachmann ersichtlich, dass sich statt der an einem Ende des Batteriestrangs beginnenden Kaskade unter entsprechender Umkehrung der Polaritäten der Operationsverstärker und Transistoren ebenso eine an dem anderen Ende des Batteriestrangs beginnende Kaskade aufbauen lässt, die nach demselben Prinzip eine minimale oder maximale Temperatur unter einer Vielzahl von Temperaturen ermittelt.

Die oben beschriebene Vorrichtung kann als Teil eines Batteriemanagementsystems eingesetzt werden, das die maximale Temperatur der Batteriezellen einer Batterie überwacht und die Batteriezellen gegen Überhitzung schützt. Ein solches Batteriemanagementsystem kann als Teil einer Batterie, insbesondere einer in einem Kraftfahrzeug eingesetzten Batterie, verwendet werden.

## Patentansprüche

1. Vorrichtung zur Messung der extremalen Temperatur unter den Temperaturen einer Vielzahl von Temperatursensoren (22-1, 22-2, ...), wobei ein erster Temperatursensor (22-1) dazu ausgelegt ist, einen Strom zu führen, der seiner Temperatur entspricht, **dadurch gekennzeichnet, dass** der (k+1)-te Temperatursensor (22-2, ...) jeweils dazu ausgelegt ist, den größeren eines Stromes, der seiner Temperatur entspricht, und des Stromes, den der k-te Temperatursensor (22-1, 22-2, ...) führt, zu führen, wobei die Vorrichtung ferner eine Vielzahl von ersten Verstärkerschaltungen (24-1, 24 2, ...) umfasst, wobei jede der ersten Verstärkerschaltungen (24-1, 24-2, ...) einen ersten Eingang, einen zweiten Eingang sowie einen Ausgang aufweist und derart ausgelegt ist, dass sich ein Strom von dem zweiten Eingang zu dem Ausgang derart einstellt, dass das elektrische Potential des ersten Eingangs mindestens gleich dem elektrischen Potential des zweiten Eingangs ist und wobei die Vorrichtung ferner eine Vielzahl von zweiten Verstärkerschaltungen (27-1, ...) umfasst, wobei jede der zweiten Verstärkerschaltungen (27-1, ...) einen ersten Eingang, einen zweiten Eingang sowie einen Ausgang aufweist und derart ausgelegt ist, dass sich ein Strom von dem Ausgang zu dem zweiten Eingang derart einstellt, dass das elektrische Potential des zweiten Eingangs mindestens gleich dem elektrischen Potential des ersten Eingangs ist,
wobei die Vorrichtung ferner eine Vielzahl von Referenzspannungsquellen (23-1, 23-2, ...) umfasst,
wobei der erste Eingang der k ten ersten Verstärkerschaltung (24-1, 24-2, ...) jeweils mit einem ersten Anschluss der k-ten Referenzspannungsquelle (23-1, 23-2, ...) verbunden ist, der zweite Eingang der k-ten ersten Verstärkerschaltung (24-1, 24-2, ...) jeweils mit einem ersten Anschluss des k-ten Temperatursensors (22-1, 22 2, ...) verbunden ist, ein zweiter Anschluss des ersten Temperatursensors (22-1) mit einem zweiten Anschluss der ersten Referenzspannungsquelle (23-1) verbunden ist, ein zweiter Anschluss des (k+1)-ten Temperatursensors (22-2, ...) jeweils mit dem Ausgang der k-ten ersten Verstärkerschaltung (24-1, 24-2, ...) und dem zweiten Eingang der k-ten zweiten Verstärkerschaltung (27-1, ...) verbunden ist und der zweite Anschluss der (k+1)-ten Referenzspannungsquelle (23-2, ...) jeweils mit dem ersten Eingang der k-ten zweiten Verstärkerschaltung (27-1, ...) verbunden ist.

2. Vorrichtung nach Anspruch 1, wobei die extremale Temperatur die maximale Temperatur ist und wobei die Temperatursensoren (22-1, 22-2, ...) jeweils Widerstände mit negativem Temperaturkoeffizienten sind.

3. Vorrichtung nach einem der vorangehenden Ansprüche, wobei jede der Verstärkerschaltungen (24-1, 24-2, ..., 27-1, ...) einen Operationsverstärker (25-1, 25-2, ..., 28-1, ...) und einen Transistor (26-1, 26-2, ..., 29-1, ...) umfasst, wobei jeweils der nicht invertierende Eingang des Operationsverstärkers (25-1, 25-2, ..., 28-1, ...) den ersten Eingang der Verstärkerschaltung (24-1, 24-2, ..., 27-1, ...) bildet, der invertierende Eingang des Operationsverstärkers (25-1, 25-2, ..., 28-1, ...) den zweiten Eingang der Verstärkerschaltung (24-1, 24-2, ..., 27-1, ...) bildet, ein erster Anschluss des Transistors (26-1, 26-2, ..., 29-1, ...) mit dem zweiten Eingang der Verstärkerschaltung (24-1, 24-2, ..., 27-1, ...) verbunden ist, ein zweiter Anschluss des Transistors (26-1, 26-2, ..., 29-1, ...) den Ausgang der Verstärkerschaltung (24-1, 24-2, ..., 27-1, ...) bildet und der Steueranschluss des Transistors (26-1, 26-2, ..., 29-1, ...) mit dem Ausgang des Operationsverstärkers (25-1, 25-2, ..., 28-1, ...) verbunden ist.

4. Vorrichtung nach einem der vorangehenden Ansprüche, wobei die Temperatursensoren (22-1, 22-2, ...) jeweils an den Batteriezellen (21-1, 21 2, ...) eines Batteriestrangs einer Batterie (20) anbringbar sind.

5. Vorrichtung nach den Ansprüchen 1, und 4, wobei der erste Anschluss der k-ten Referenzspannungsquelle (23-1, 23-2, ...) und der erste Eingang der k ten ersten Verstärkerschaltung (24-1, 24-2, ...) jeweils mit dem Minuspol der k-ten Batteriezelle (21-1, 21-2,...) verbindbar sind und wobei der Pluspol der (k+1)-ten Batteriezelle (21-2, ...) jeweils mit dem Ausgang der k-ten zweiten Verstärkerschaltung (27-1, ...) verbindbar ist.

6. Batteriemanagementsystem mit einer Vorrichtung nach Anspruch oder 5.

7. Batterie mit einer Vorrichtung nach Anspruch 4 oder 5 oder einem Batteriemanagementsystem nach Anspruch 6.

8. Kraftfahrzeug, insbesondere elektrisches Kraftfahrzeug, mit einer Batterie nach Anspruch 7.

## Claims

1. Apparatus for measuring the extremal temperature among the temperatures from a multiplicity of temperature sensors (22-1, 22-2, ...), wherein a first temperature sensor (22-1) is designed to carry a current that corresponds to its temperature, **characterized in that** the (k+1)-th temperature sensor (22-2, ...) is in each case designed to carry the larger of a current that corresponds to its temperature and the current that is carried by the k-th temperature sensor (22-1, 22-2, ...), wherein the apparatus also comprises a multiplicity of first amplifier circuits (24-1, 24-2, ...), wherein each of the first amplifier circuits (24-1, 24-2, ...) has a first input, a second input and an output and is designed such that a current from the second input to the output appears such that the electrical potential of the first input is at least equal to the electrical potential of the second input and wherein the apparatus also comprises a multiplicity of second amplifier circuits (27-1, ...), wherein each of the second amplifier circuits (27-1, ...) has a first input, a second input and an output and is designed such that a current from the output to the second input appears such that the electrical potential of the second input is at least equal to the electrical potential of the first input, wherein the apparatus also comprises a multiplicity of reference voltage sources (23-1, 23-2, ...), wherein the first input of the k-th first amplifier circuit (24-1, 24-2, ...) is in each case connected to a first connection of the k-th reference voltage source (23-1, 23-2, ...), the second input of the k-th first amplifier circuit (24-1, 24-2, ...) is in each case connected to a first connection of the k-th temperature sensor (22-1, 22-2, ...), a second connection of the first temperature sensor (22-1) is connected to a second connection of the first reference voltage source (23-1), a second connection of the (k+1)-th temperature sensor (22-2, ...) is in each case connected to the output of the k-th first amplifier circuit (24-1, 24-2, ...) and to the second input of the k-th second amplifier circuit (27-1, ...) and the second connection of the (k+1)-th reference voltage source (23-2, ...) is in each case connected to the first input of the k-th second amplifier circuit (27-1, ...).

2. Apparatus according to Claim 1, wherein the extremal temperature is the maximum temperature and wherein the temperature sensors (22-1, 22-2, ...) are in each case negative temperature coefficient resistors.

3. Apparatus according to either of the preceding claims, wherein each of the amplifier circuits (24-1, 24-2, ..., 27-1, ...) comprises an operational amplifier (25-1, 25-2, ..., 28-1, ...) and a transistor (26-1, 26-2, ..., 29-1, ...), wherein in each case the noninverting input of the operational amplifier (25-1, 25-2, ..., 28-1, ...) forms the first input of the amplifier circuit (24-1, 24-2, ..., 27-1, ...), the inverting input of the operational amplifier (25-1, 25-2, ..., 28-1, ...) forms the second input of the amplifier circuit (24-1, 24-2, ..., 27-1, ...), a first connection of the transistor (26-1, 26-2, ..., 29-1, ...) is connected to the second input of the amplifier circuit (24-1, 24-2, ..., 27-1, ...), a second connection of the transistor (26-1, 26-2, ..., 29-1, ...) forms the output of the amplifier circuit (24-1, 24-2, ..., 27-1, ...) and the control connection of the transistor (26-1, 26-2, ..., 29-1, ...) is connected to the output of the operational amplifier (25-1, 25-2, ..., 28-1, ...).

4. Apparatus according to one of the preceding claims, wherein the temperature sensors (22-1, 22-2, ...) can in each case be fitted on the battery cells (21-1, 21-2, ...) of a battery line in a battery (20).

5. Apparatus according to Claims 1 and 4, wherein the first connection of the k-th reference voltage source (23-1, 23-2, ...) and the first input of the k-th first amplifier circuit (24-1, 24-2, ...) can in each case be connected to the negative pole of the k-th battery cell (21-1, 21-2, ...) and wherein the positive pole of the (k+1)-th battery cell (21-2, ...) can in each case be connected to the output of the k-th second amplifier circuit (27-1, ...).

6. Battery management system having an apparatus according to Claim 4 or 5.

7. Battery having an apparatus according to Claim 4 or 5 or a battery management system according to Claim 6.

8. Motor vehicle, particularly electric motor vehicle, having a battery according to Claim 7.

## Revendications

1. Dispositif de mesure de la température extrême en-dessous des températures d'une pluralité de capteurs de température (22-1, 22-2, ...), dans lequel un premier capteur de température (22-1) est conçu pour conduire un courant qui correspond à sa température, **caractérisé en ce que** le (k+1)-ème capteur de température (22-2, ...) est respectivement conçu pour conduire le plus grand d'un courant qui correspond à sa température, et du courant que conduit le k-ème capteur de température (22-1, 22-2, ...), dans lequel le dispositif comprend en outre une pluralité de premiers circuits amplificateurs (24-1, 24-2, ...), dans lequel chacun des premiers circuits amplificateurs (24-1, 24-2, ...) comporte une première entrée, une deuxième entrée ainsi qu'une sortie et est conçu de manière à régler un courant allant de la deuxième entrée à la sortie, **en ce que** le potentiel électrique de la première entrée est au moins égal au potentiel électrique de la deuxième entrée et dans lequel le dispositif comprend en outre une pluralité de deuxièmes circuits amplificateurs (27-1, ...), dans lequel chacun des deuxièmes circuits amplificateurs (27-1, ...) comporte une première entrée, une deuxième entrée ainsi qu'une sortie et est conçu de manière à régler un courant allant de la sortie à la deuxième entrée afin que le potentiel électrique de la deuxième entrée soit au moins égal au potentiel électrique de la première entrée,
dans lequel le dispositif comprend en outre une pluralité de sources de tension de référence (23-1, 23-2, ...),
dans lequel la première entrée du k-ème premier circuit amplificateur (24-1, 24-2, ...) est respectivement reliée à une première borne de la k-ème source de tension de référence (23-1, 23-2, ...), la deuxième entrée du k-ème premier circuit amplificateur (24-1, 24-2, ...) est respectivement reliée à une première borne du k-ème capteur de température (22-1, 22-2, ...), une deuxième borne du premier capteur de température (22-1) est reliée à une deuxième borne de la première source de tension de référence (23-1), une deuxième borne du (k+1)-ème capteur de température (22-2, ...) est respectivement reliée à la sortie du k-ème premier circuit amplificateur (24-1, 24-2, ...) et à la deuxième entrée du k-ème deuxième circuit amplificateur (27-1, ...) et la deuxième borne de la (k+1)-ème source de tension de référence (23-2, ...) est respectivement reliée à la première entrée du k-ème deuxième circuit amplificateur (27-1, ...).

2. Dispositif selon la revendication 1, dans lequel la température extrême est la température maximale et dans lequel les capteurs de température (22-1, 22-2, ...) sont respectivement des résistances ayant un coefficient de température négatif.

3. Dispositif selon l'une quelconque des revendications précédentes, dans lequel chacun des circuits amplificateurs (24-1, 24-2, ... , 27-1, ...) comprend un amplificateur opérationnel (25-1, 25-2, ..., 28-1, ...) et un transistor (26-1, 26-2, ... , 29-1, ...), dans lequel, respectivement, l'entrée non inverseuse de l'amplificateur opérationnel (25-1, 25-2, ..., 28-1, ...) forme la première entrée du circuit amplificateur (24-1, 24-2, ..., 27-1, ...), l'entrée inverseuse de l'amplificateur opérationnel (25-1, 25-2, ..., 28-1, ...) forme la deuxième entrée du circuit amplificateur (24-1, 24-2, ... , 27-1, ...), une première borne du transistor (26-1, 26-2, ..., 29-1, ...) est reliée à la deuxième entrée du circuit amplificateur (24-1, 24-2, ... , 27-1, ...), une deuxième borne du transistor (26-1, 26-2, ..., 29-1, ...) forme la sortie du circuit amplificateur (24-1, 24-2, ... , 27-1, ...) et la borne de commande du transistor (26-1, 26-2, ... , 29-1, ...) est reliée à la sortie de l'amplificateur opérationnel (25-1, 25-2, ... , 28-1, ...).

4. Dispositif selon l'une quelconque des revendications précédentes, dans lequel les capteurs de température (22-1, 22-2, ...) peuvent respectivement être montés sur les éléments de batterie (21-1, 21-2, ...) d'un bloc de batterie d'une batterie (20).

5. Dispositif selon les revendications 1 et 4,
dans lequel la première borne de la k-ème source de tension de référence (23-1, 23-2, ...) et la première entrée du k-ème premier circuit amplificateur (24-1, 24-2, ...) peuvent respectivement être reliées au pôle négatif du k-ème élément de batterie (21-1, 21-2, ...) et dans lequel le pôle positif du (k+1)-ème élément de batterie (21-2, ...) peut respectivement être relié à la sortie du k-ème deuxième circuit amplificateur (27-1, ...).

6. Système de gestion de batterie comportant un dispositif selon la revendication 4 ou 5.

7. Batterie comportant un dispositif selon la revendication 4 ou 5 ou un système de gestion de batterie selon la revendication 6.

8. Véhicule automobile, notamment véhicule électrique, comportant une batterie selon la revendication 7.
